(19) **Europäisches Patentamt**
**European Patent Office**
**Office européen des brevets**

(11) **EP 3 196 904 B1**

(12) **EUROPEAN PATENT SPECIFICATION**

(45) Date of publication and mention
of the grant of the patent:
**26.07.2023 Bulletin 2023/30**

(21) Application number: **15842099.2**

(22) Date of filing: **03.07.2015**

(51) International Patent Classification (IPC):
*H01G 4/30* (2006.01)   *H01C 7/02* (2006.01)
*H01C 7/04* (2006.01)   *H01C 7/10* (2006.01)
*H01G 4/232* (2006.01)   *H01G 4/252* (2006.01)
*H01C 1/14* (2006.01)   *H01C 1/142* (2006.01)

(52) Cooperative Patent Classification (CPC):
**H01G 4/2325; H01C 1/1406; H01C 1/1413;
H01C 1/142**

(86) International application number:
**PCT/JP2015/069233**

(87) International publication number:
**WO 2016/042884 (24.03.2016 Gazette 2016/12)**

(54) **CHIP-TYPE CERAMIC SEMICONDUCTOR ELECTRONIC COMPONENT**

KERAMISCHE HALBLEITERELEKTRONIKKOMPONENTE IN FORM EINES CHIPS

COMPOSANT ÉLECTRONIQUE À SEMI-CONDUCTEUR EN CÉRAMIQUE DE TYPE PUCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2014 JP 2014191452**

(43) Date of publication of application:
**26.07.2017 Bulletin 2017/30**

(73) Proprietor: **Murata Manufacturing Co., Ltd.
Nagaokakyo-shi, Kyoto 617-8555 (JP)**

(72) Inventors:
• **ISOGAI, Keisuke
Nagaokakyo-shi
Kyoto 617-8555 (JP)**
• **IMAMURA, Satoshi
Nagaokakyo-shi
Kyoto 617-8555 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
| | |
|---|---|
| **EP-A1- 2 393 089** | **JP-A- H1 092 606** |
| **JP-A- H08 162 357** | **JP-A- H09 115 772** |
| **JP-A- H10 284 343** | **JP-A- 2000 243 662** |
| **JP-A- 2002 015 944** | **JP-A- 2002 299 154** |
| **JP-A- 2009 206 433** | **JP-A- 2011 249 615** |
| **JP-A- 2013 191 831** | **JP-A- 2014 022 713** |
| **US-A1- 2009 052 114** | |

**Description**

TECHNICAL FIELD

The present invention relates to a chip-type ceramic semiconductor electronic component, which is a positive (or positive temperature coefficient, PTC) thermistor or a negative (or negative temperature coefficient, NTC) thermistor.

BACKGROUND ART

In recent years, with the development of electronics technology, the variation in resistance value is required to be reduced in chip-type ceramic semiconductor electronic components.

For example, WO 2009/096333 A1 discloses a chip-type semiconductor ceramic electronic component including: a ceramic body of a semiconductor ceramic; first external electrodes formed on both end surfaces of the ceramic body; and second external electrodes extended to cover the surfaces of the first external electrodes and parts of side surfaces of the ceramic body, where the first external electrodes are composed of a material that has an ohmic property with respect to the ceramic body, whereas the second external electrodes are composed of a material that has no ohmic property with respect to the ceramic body.

JP H10 92606 A describes a chip thermistor which has high accuracy, a high environmental resistance, and highly reliable mechanical strength and temperature cycle performance, etc., at high mass-productivity. External electrodes on both end faces of a chip-like thermistor blank body are respectively constituted in laminated structures of conductive metallic layers, conductive resin layers, and plated-meal layers. After glass layers are formed on the four side faces of a prism-like thermistor blank body obtained by cutting a thermistor wafer into strip-like bodies, the thermistor blank body is obtained by cutting the prism-like blank body and the external electrodes are formed on both end faces of the blank body.

EP 2 393 089 A1 describes a chip-type electronic component with high reliability, which is able to suppress and prevent fatal damage to a ceramic body due to cracking even if a substrate with the chip-type electronic component mounted thereon undergoes a deflection. The chip-type electronic component includes a ceramic body including internal electrodes; resin electrode layers formed in a region including at least end surfaces of the ceramic body, and formed to connect to the internal electrodes directly or indirectly and connect with the ceramic body; and plating metal layers formed to cover the resin electrode layers, wherein the adhesion strength between the ceramic body and the resin electrode layer is higher than the adhesion strength between the resin electrode layer and the plating metal layer.

SUMMARY OF THE INVENTION

An object of the present invention is to provide a chip-type ceramic semiconductor electronic component where the variation in the rate of change in resistance value is small between before and after mounting.

This object is achieved by a chip-type ceramic semiconductor electronic component according to claim 1.

Problem to be solved by the invention

Corners formed by the side surfaces and end surfaces of the ceramic body are curved in the chip-type semiconductor ceramic electronic component described in WO 2009/096333 A1. WO 2009/096333 A1 discloses that the curvature radius R of the corner of the ceramic body, the maximum thickness y of a layer in contact with the ceramic body, of first external electrode layers, from the end surface of the ceramic body, and the minimum thickness x of a layer in contact with the side surface of the ceramic body, of the second external electrode, from the vertex of the corner of the ceramic body are set to fall within specific ranges of numerical values, thereby providing a chip-type semiconductor ceramic electronic component with small individual variations in resistance value.

However, with enhanced performance of electronic devices, the variation in the rate of change in resistance value between before and after mounting chip-type ceramic semiconductor electronic components is required to be reduced in a more effective manner.

Means for solving the problem

The inventors have, as a result of repeated studies, found out that heat treatment at high temperatures such as baking can partially oxidize metal elements contained in first external electrodes in the formation of second external electrodes, and that the metal elements contained in the first external electrodes can tend to be partially diffused and segregate within the first external electrodes. Furthermore, the inventors have found that the occurrence of the oxidation and/or segregation, in chip-type ceramic semiconductor electronic components, tends to increase the variation in the rate of change in resistance value between before and after mounting. The inventors have, based on the foregoing findings, the formation of second external electrodes with the use of a resin material that can be hardened at a lower temperature than the temperature for the above-mentioned heat treatment such as baking can suppress the oxidation and/or segregation of the metal elements contained in first external electrodes, and as a result, reduce the variation in the rate of change in resistance value before and after mounting in a chip-type ceramic semiconductor electronic component, thereby achieving the present invention.

According to an aspect of the present invention, a chip-type ceramic semiconductor electronic component is provided which is recited in claim 1.

Advantageous effect of the invention

The present invention is configured to have the foregoing configuration, thereby making it possible to achieve a chip-type ceramic semiconductor electronic component where the variation in the rate of change in resistance value is small before and after mounting.

BRIEF EXPLANATION OF DRAWINGS

FIG. 1 is a schematic cross-sectional view of a chip-type ceramic semiconductor electronic component according to a first embodiment of the present invention.

FIG. 2 is a schematic cross-sectional view of a modification example of the chip-type ceramic semiconductor electronic component according to the first embodiment of the present invention.

FIG. 3 is a schematic cross-sectional view of a chip-type ceramic semiconductor electronic component according to a second embodiment of the present invention.

FIG. 4(a) is a schematic cross-sectional view of a ceramic body with first external electrodes formed on both end surfaces of the body in accordance with an example of a method for manufacturing the chip-type ceramic semiconductor electronic component according to the first embodiment of the present invention, whereas FIG. 4(b) is a side view thereof as viewed from the end surface of the ceramic body with the first external electrodes formed on the both end surfaces.

FIG. 5 is a schematic cross-sectional view of a chip-type ceramic semiconductor electronic component manufactured in accordance with an example of a method for manufacturing the chip-type ceramic semiconductor electronic component according to the first embodiment of the present invention.

FIG. 6 shows a SEM image and the results of elemental mapping in a cross section of a first external electrode in a chip-type ceramic semiconductor electronic component according to Example 1.

FIG. 7 shows a SEM image and the results of elemental mapping in a cross section of a first external electrode in a chip-type ceramic semiconductor electronic component according to Comparative Example 1.

MODE FOR CARRYING OUT THE INVENTION

Embodiments of the present invention will be described below with reference to the drawings. However, the following embodiments are intended for exemplification, and the present invention is not to be considered limited to the following embodiments. In particular, while PTC thermistors are explained as examples in the following embodiments, the present invention is not limited to PTC thermistors, but can be also applied similarly to other chip-type ceramic semiconductor electronic components such as NTC thermistors. Further, unless otherwise specified, the dimensions, materials, shapes, relative configurations, and the like of constituent elements as described below are not intended to limit the scope of the present invention thereto only, but simply by way of illustrative example. In addition, the sizes, shapes, positional relations, and the like of the constituent elements shown in the respective drawings may be exaggerated for making the explanation clear.

[First Embodiment]

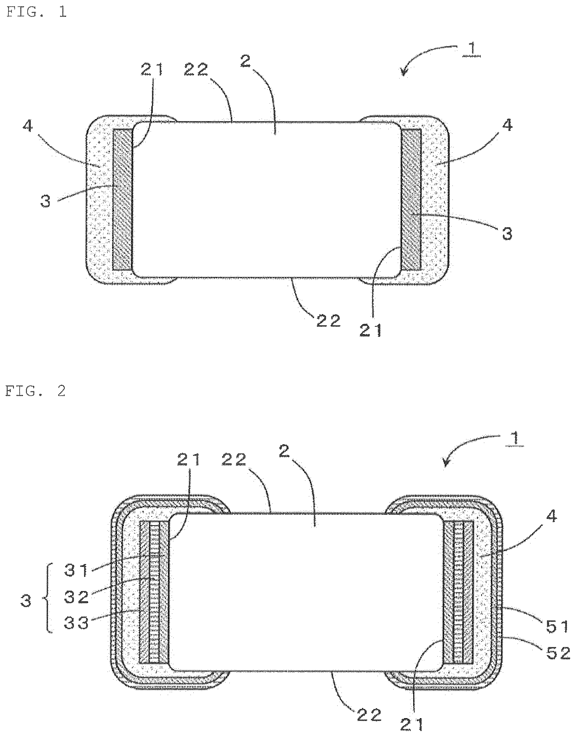

FIG. 1 shows a schematic cross-sectional view of a chip-type ceramic semiconductor electronic component according to a first embodiment. The chip-type ceramic semiconductor electronic component 1 shown in FIG. 1 includes: a ceramic body 2 including a ceramic semiconductor;

a pair of first external electrodes 3 formed on both end surfaces 21 of the ceramic body 2; and
a pair of second external electrodes 4 formed to cover the first external electrodes 3 and extend partially on side surfaces 22 of the ceramic body 2.

In accordance with the present embodiment, the ceramic body 2 includes, as its main constituent, an N-type semiconductor that has a positive resistance-temperature characteristic. For example, $((Ba, Pb, Sr, Ca)0.0096Er_{0.004})TiO_3$ can be used as the N-type semiconductor. The ceramic body 2 preferably includes the N-type semiconductor on the order of 99.5 to 99.9 weight%. The ceramic body 2 may further include $SiO_2$ and $MnO_2$, in addition to the N-type semiconductor. The composition of the ceramic body 2 can be measured by, for example, ICP (inductively-coupled plasma) emission spectrometry or XRF (fluorescent X-ray analysis).

The pair of first external electrodes 3 is formed on the both end surfaces 21 of the ceramic body 2. It is to be noted that in this specification, two surfaces perpendicular to a longer side of the ceramic body 2 are referred to as the "end surfaces" 21, whereas four surfaces perpendicular to the both end surfaces 21 are referred to as "side surfaces" 22. The first external electrodes 3 may be formed on the entire end surfaces 21 of the ceramic body 2, or may be formed partially on the end surfaces 21. In the present embodiment, the first external electrodes 3 have an ohmic property with respect to the ceramic body 2. Details of the first external electrodes 3 will be described later.

The pair of second external electrodes 4 is formed to cover the first external electrodes 3 and extend partially on the side surfaces 22 of the ceramic body 2. When the first external electrodes 3 are formed on the entire end surfaces 21 of the ceramic body 2, the second external electrodes 4 are formed to cover the whole peripheries of the first external electrodes 3 and extend partially on the side surfaces 22 of the ceramic body 2. When the first external electrodes 3 are formed partially on the end surfaces 21 of the ceramic body 2, the second external electrodes 4 are formed to cover the whole peripheries of the first external electrodes 3, and the end surfaces 21 of the ceramic body 2 without the first external electrodes 3 formed, and extend partially on the side surfaces 22 of the ceramic body 2. In any of the foregoing cases, the second external electrodes 4 are formed to cover the entire ends of the ceramic body 2 with the first external electrodes 3 formed. The second external electrodes 4 are provided for improving the solderability for mounting, and for preventing the oxidation of the metal elements contained in the first external electrodes. The second external electrodes 4 are formed to extend partially on the side surfaces 22 of the ceramic body 2, thereby making it possible to ensure the connectivity between a substrate and the chip-type ceramic semiconductor electronic component 1 in the case of mounting the chip-type ceramic semiconductor electronic component 1.

The second external electrodes 4 include a conductive agent, and a thermosetting resin hardened at a temperature of 500°C or lower. The second external electrodes 4 are configured as just described, thereby making it possible to form the second external electrodes 4 at a temperature that is lower than that of heat treatment at a high temperature, such as conventional baking. As a result, the variation in the rate of change in resistance value before and after mounting can be reduced in the obtained chip-type ceramic semiconductor electronic component 1.

In the chip-type ceramic semiconductor electronic component according to the present invention, the mechanism that can reduce the variation in the rate of change in resistance value between before and after mounting is not to be considered bound by any theory, but considered roughly as follows.

In the case of carrying out a heat treatment in the formation of the second external electrodes 4, heat is applied also to the first external electrodes 3. The application of heat to the first external electrodes 3 has a tendency to partially oxidize the metal elements included in the first external electrodes 3. In addition, the application of heat has a tendency to partially diffuse, within the first external electrodes 3, the metal elements included in the first external electrodes 3, thereby causing the elements to be segregated. As just described, the formation of metal oxides in the first external electrodes 3 and the segregation, in the external electrodes 3, of some of the metal elements present in the first external electrodes 3, in particular, the above-described metal oxides through the diffusion thereof are believed to cause the variation in rate of change in resistance value between before and after the mounting to be increased in the chip-type ceramic semiconductor electronic component. In accordance with the present invention, with the use of a thermosetting resin that can be hardened at 500°C or lower as a material for the second external electrodes 4, the second external electrodes 4 can be formed at a relatively low temperature of 500°C or lower. Thus, the formation of the metal oxides in the first external electrodes 3 can be suppressed, and some of the metal elements present in the first external electrodes 3, in particular, the above-described metal oxides can be kept from being diffused and segregated. As a result, the variation in rate of change in resistance value between before and after mounting is believed to be reduced in the obtained chip-type ceramic semiconductor electronic component 1.

The following is assumed as one of causes of the fact that the formation of metal oxides in the first external electrodes 3 and the segregation, in the external electrodes 3, of some of the metal elements present in the first external electrodes 3, in particular, the above-described metal oxides through the diffusion thereof lead to the variation in rate of change in resistance value. In mounting the chip-type ceramic semiconductor electronic component 1 onto a substrate, stress may be applied to the chip-type ceramic semiconductor electronic component 1. When some of the metal elements present in the first external electrodes 3, in particular, metal oxides which can be produced in the formation of the second external electrodes 4 are segregated within the first external electrodes 3, the application of the stress have the possibility of generating cracks at the part with the segregation. This crack generation is believed to have the possibility of causing variation in rate of change in resistance value. The chip-type ceramic semiconductor electronic component 1 according to the present embodiment can suppress the segregation of the metal elements in the first external electrodes 3, and thus prevented crack generation even when stress is applied in mounting.

Additionally, the chip-type ceramic semiconductor electronic component 1 according to the present embodiment shows favorable flexure strength, because the second external electrodes 4 include the thermosetting resin. Therefore, the chip-type ceramic semiconductor electronic component 1 is made less likely to be cracked. Furthermore, the chip-type ceramic semiconductor electronic component 1 according to the present embodiment can reduce the manufacturing cost, because there is no need for any step of baking the second external electrodes at a high temperature, which are high in power consumption, in the manufacturing process.

Moreover, the formation of metal oxides in the first external electrodes 3 and the segregation, in the first external electrodes 3, of some of the metal elements present in the first external electrodes 3, in particular, the above-described metal oxides through the diffusion thereof can lead to an increase in resistance value at room temperature in the obtained chip-type ceramic semiconductor electronic component 1. For the chip-type ceramic semiconductor electronic component 1 according to the present embodiment, the formation of the metal oxides and the diffusion and segregation of the metal elements (in particular, the metal oxides) are suppressed, thereby making it possible to produce the effect of suppressing the increase in resistance value at room temperature in the obtained chip-type ceramic semiconductor electronic component 1. This effect is beneficial particularly when the chip-type ceramic semiconductor electronic component 1 is a PTC thermistor. Suppressing the increase in resistance value at room temperature in the PTC thermistor can increase the difference between the resistance value at room temperature and the resistance value at a temperature that is higher than the Curie temperature, thereby improving characteristics of the PTC thermistor.

The second external electrodes 4 preferably include a conductive agent, and a thermosetting resin hardened at a temperature of 250°C or lower. In accordance with the foregoing composition, the second external electrodes 4 can be formed at a much lower temperature of 250°C, and the oxidation, diffusion, and segregation of the metal elements present in the first external electrodes 3 can be thus prevented in a more effective manner. As a result, the variation in the rate of change in resistance value before and after mounting can be further reduced in the chip-type ceramic semiconductor electronic component 1.

The thermosetting resin which can be used in the present embodiment is a thermosetting resin that can be hardened at a temperature of 500°C or lower, preferably 250°C or lower, and examples of the resin include, but not limited thereto, epoxy resins and phenolic resins, for example. One type of thermosetting resin may be used alone, or two or more types of thermosetting resins may be used in mixture.

Conductive agents which can be used in the present embodiment include, but not limited thereto, metal particles containing at least one of Ag, AgPd, and Cu, for example. The metal particles used as the conductive agent may be particles of a single metal, or may be particles of an alloy containing at least one of the metal elements mentioned above. One of the metal particles mentioned above may be used alone, or two or more thereof may be used in combination. The metal particles used as the conductive agent are preferably approximately 1.0 to 15 $\mu$m in average particle size. The use of the foregoing conductive agent makes it possible to achieve a chip-type ceramic semiconductor electronic component which has high mountability to a substrate, and excellent solderability.

In the present embodiment, the second external electrodes 4 preferably include the thermosetting resin at 10 to 30 weight% and the conductive agent 70 to 90 weighty. When the content of the thermosetting resin is 10 weight% or more, the electrode strength can be improved. When the content of the thermosetting resin is 30 weight% or less, sufficient conductivity can be ensured. When the content of the conductive agent is 70 weight% or more, sufficient conductivity can be ensured. When the content of the conductive agent is 90 weight% or less, the electrode strength can be improved. The composition of the second external electrodes 4 can be measured by, for example, ICP emission spectrometry or XRF.

The thickness of the second external electrode from the surface of the first external electrode is 1 to 35 $\mu$m. The thickness of 1 to 35 $\mu$m can effectively prevent solder burst which can be caused in mounting. In mounting the chip-type ceramic semiconductor electronic component 1 onto a substrate by reflow mounting or the like, water which can be included in the electrodes may be vaporized, thereby blowing out from the electrodes. The water such as water vapor blowing out from the electrodes may blow off the solder, and scatter the blown solder onto the substrate. This phenomenon is generally referred to as "solder burst". The thickness of the second external electrode 4 is made 35 $\mu$m or less, thereby making it possible to reduce the absolute amount of water which can be included in the second external electrode 4, and as a result, prevent solder burst in an effective manner.

FIG. 2 shows a schematic cross-sectional view of a modification example of the chip-type ceramic semiconductor electronic component 1 according to the present embodiment. It is to be noted that while FIG. 2 shows an embodiment where first external electrodes 3 have a three-layer structure, the first external electrodes 3 may be each composed of a single layer in the present modification example. As shown in FIG. 2, the chip-type ceramic semiconductor electronic component 1 may further include first plated layers 51 formed to cover the surfaces of second external electrodes 4. The first plated layers 51 are layers containing at least one of Ni and Cu. Including the first plated layers 51 can prevent, in a more effective manner, solder burst which can be caused in mounting the chip-type ceramic semiconductor electronic component 1 by reflow mounting or the like. The first plated layers 51 act to prevent water from blowing out from within the second external electrodes 4 during the mounting. In addition, the first plated layers 51 also act to prevent ingress of water from the ambient environment into the chip-type ceramic semiconductor electronic component 1. Furthermore, the first plated layers 51 can also prevent characteristic degradation of the electronic component due to the temperature, humidity, and the like of the ambient environment, thereby improving the heat resistance of the electronic component.

The first plated layer 51 is preferably 3 to 10 $\mu$m in thickness. The thickness of 3 $\mu$m or more can prevent solder burst in a more effective manner. The thickness of 10 $\mu$m or less can keep the ceramic body 2 from being cracked by thermal contraction of the first plated layers 51, which can be caused in mounting the chip-type ceramic semiconductor electronic component 1.

The ratio is preferably 5 : 1 to 1 : 1 between the thickness of the second external electrode 4 from the surface of the first external electrode 3 and the thickness of the first plated layer 51. Within the range mentioned above, solder burst in mounting can be prevented in a more effective manner.

As shown in FIG. 2, the chip-type ceramic semiconductor electronic component 1 may further include second plated layers 52 formed to cover the surfaces of the first plated layers 51. The second plated layers are layers containing at least Sn. The chip-type ceramic semiconductor electronic component 1 includes the second plated layers 52, thereby improving the solder wettability in mounting, and thus increasing the mountability. The second plated layer 52 is preferably 3 to 10 $\mu$m in thickness. The thickness of 3 $\mu$m or more can stabilize the solder wettability. The thickness of 10 $\mu$m or less can inhibit the growth of plating at the surface of the ceramic body 2. The growth of plating at the surface of the ceramic body 2 has the possibility of causing short circuits in mounting, and also has the possibility of causing defective appearances, changes in ohmic property (variations in resistance value), and the like. It is to be noted that while FIG. 2 shows an embodiment including the first plated layers 51 and the second plated layers 52, the second plated layers 52 can be omitted.

In the present embodiment, the first external electrodes 3 is adapted to have an ohmic property with respect to the ceramic body 2. The first external electrodes 3 may be each composed of a single layer, or composed of two or more layers. When the first external electrodes 3 are each composed of two or more layers, at least the layer in contact with the ceramic body 2, of the two or more layers, has only to have an ohmic property with respect to the ceramic body 2. In the chip-type ceramic semiconductor electronic component 1, the layer that has an ohmic property with respect to the ceramic body 2 makes a contribution to the resistance characteristics of the chip-type ceramic semiconductor electronic component 1. The second external electrodes 4 make substantially no contribution to the resistance characteristics.

First, a case where the first external electrodes 3 are each composed of a single layer will be described with reference to FIG. 1. The composition of the first external electrodes 3 can be selected appropriately so as to have an ohmic property with respect to the ceramic body 2. In the present embodiment, the first external electrodes 3 preferably contain, as their main constituent, at least one of Cr, Zn-Ag, Ti, W, Zn, and V. The first external electrodes 3 may be, for example, composed of at least one of Cr, Zn-Ag, Ti, W, Zn, and V. The first external electrode 3 is preferably 0.07 to 1.0 $\mu$m in thickness. The thickness of 0.07 $\mu$m or more can improve the durability against the external force applied in the case of processing such as barrel polishing, thereby making it possible to ensure a sufficient ohmic property. The thickness of 1.0 $\mu$m or less can reduce the manufacturing cost, thereby improving the productivity. The composition of the first external electrodes 3 can be measured by, for example, WDX (wavelength dispersive X-ray analysis) or SAM (scanning Auger electron microscope).

The metal elements included in the first external electrodes 3 have a tendency to be oxidized, and have a tendency to undergo diffusion and segregation within the first external electrodes 3, when heat is applied in the formation of the second external electrodes 4 under a high-temperature condition. The segregation can be caused particularly at the interfaces between the first external electrodes 3 and the second external electrodes 4. When the oxidized metal elements are diffused and segregated, layers of metal oxides can be formed at the interfaces between the first external electrodes 3 and the second external electrodes 4. The present invention can prevent such oxidization, diffusion, and segregation in an effective manner, because the second external electrodes 4 can be formed at a relatively low temperature. As a result, the chip-type ceramic semiconductor electronic component 1 can be achieved where the variation in the rate of change in resistance value is small before and after mounting.

Next, a case where the first external electrodes 3 each include two or more layers will be described with reference to FIG. 2. While the first external electrodes 3 each include three layers (31, 32, 33) in FIG. 2, the present invention is not to be considered limited thereto. It is to be noted that while the chip-type ceramic semiconductor electronic component 1 shown in FIG. 2 include the first plated layers 51 and the second plated layers 52, the present invention is not to be considered limited thereto, but for example, the component may be configured to include the first external electrodes 3 each including two or more layers, and the first plated layers 51, but include no second plated layers 52, or to include the first external electrodes 3 each including two or more layers, but include no first plated layers 51 or second plated layers 52.

When the first external electrodes 3 each include two or more layers, at least the first layers 31 in contact with the ceramic body 2, of the two or more layer, has only to have an ohmic property with respect to the ceramic body 2. The composition of the first layers 31 can be selected appropriately so as to have an ohmic property with respect to the ceramic body 2. In the present embodiment, the first layers 31 of the first external electrodes 3 preferably contain at least one of Cr, Zn-Ag, Ti, W, Zn, and V. The first layers 31 may be, for example, composed of at least one of Cr, Zn-Ag, Ti, W, Zn, and V. The first layer 31 is preferably 0.3 to 1.0 $\mu$m in thickness. The thickness of 0.3 $\mu$m or more can improve the durability against the external force applied in the case of processing such as barrel polishing, thereby making it possible to ensure a sufficient ohmic property. The thickness of 1.0 $\mu$m or less can reduce the manufacturing cost, thereby improving the productivity.

When the first external electrodes 3 each include two or more layers, the first external electrodes 3 may each further include the second layer 32 formed on the first layer 31. The second layers 32 are layers for improving the adhesion between the first layers 31 that have an ohmic property and the second external electrodes 4, or the adhesion between the first layers 31 and third layers 33 when the first external electrodes 3 include the third layers 33 described later. The composition of the second layers 32 can be set appropriately depending on the compositions of the first layer 31 and the second external electrode 4 or the third layer 33. In the present embodiment, the second layers 32 are layers containing Ni and one or more metal elements selected from Cu, Cr, and V. The second layers 32 preferably contain 50 to 80 weight% of Ni, and 20 to 50 weight% of one or more metal elements selected from Cu, Cr, and V. The second layer 32 is preferably 0.5 to 2.0 $\mu$m in thickness. The thickness of 0.5 $\mu$m or more can further reduce the variation in rate of change in resistance value. The thickness of 2.0 $\mu$m or less can reduce the manufacturing cost, thereby improving the productivity.

The metal elements included in the second layers 32 of the first external electrodes 3 have a tendency to be oxidized by the application of heat, and have a tendency to undergo diffusion and segregation within the first external electrodes 3, when the second external electrodes 4 are formed under a high-temperature condition. When the first external electrodes 3 include no third layer 33 as will be described later, the segregation can be caused, in particular, at the interfaces between the second layers 32 of the first external electrodes 3 and the second external electrodes 4. When the oxidized metal elements undergo diffusion and segregation, metal oxide layers can be formed at the interfaces between the second layers 32 and the second external electrodes 4. When the first external electrodes 3 each further include the third layers 33 as will be described later, the segregation can be caused, in particular, at the interfaces between the second layers 32 and third layers 33 of the first external electrodes 3. When the oxidized metal elements undergo diffusion and segregation, metal oxide layers can be formed at the interfaces between the second layers 32 and the third layers 33. The ease of diffusion and segregation of the metal elements is determined by affinity for the metal elements included in the layers in contact with the second layers 32, that is, the second external electrodes 4 or the third layers 33 of the first external electrodes 3. For example, when the layers in contact with the second layers 32 (the second external electrodes 4 or the third layers 33 of the first external electrodes 3) contain Ag as their main constituent, Cu, Cr, V, and the like have a tendency to undergo diffusion and segregation in the second layers 32. The present invention can prevent the foregoing oxidization, diffusion, and segregation in an effective manner, because the second external electrodes 4 can be formed at a relatively low temperature. As a result, the chip-type ceramic semiconductor electronic component 1 can be achieved which has a low resistance value at room temperature after mounting, and a small variation in the rate of change in resistance value.

The first external electrodes 3 may each further include the third layers 33 formed on the second layers 32. The third layers 33 prevent the oxidation of the first layers 31 and the second layers 32, and protect the first layers 31 and the second layers 32 from external forces. The third layers 33 include the same conductive agent as the conductive agent included in the second external electrodes 4. In the present embodiment, the third layers 33 are layers containing at least one of Ag, AgPd, and Cu. The third layers 33 may be, for example, composed of Ag. The thickness of the third layer 33 can be set to, for example, 0.5 to 1.5 $\mu$m.

While the chip-type ceramic semiconductor electronic components according to the first embodiment, with no internal electrodes disposed within the ceramic bodies, have been described above, the present invention can be also applied as well to chip-type ceramic semiconductor electronic components with internal electrodes disposed within the ceramic bodies, as will be described below in a second embodiment. Above all, the present invention is particularly effective in chip-type ceramic semiconductor electronic components according to the first embodiment, with no internal electrodes disposed within ceramic bodies. This is because the oxidization, diffusion, and segregation of the metal elements within the first external electrodes largely affect resistance characteristics in the chip-type ceramic semiconductor electronic components according to the first embodiment.

[Second Embodiment]

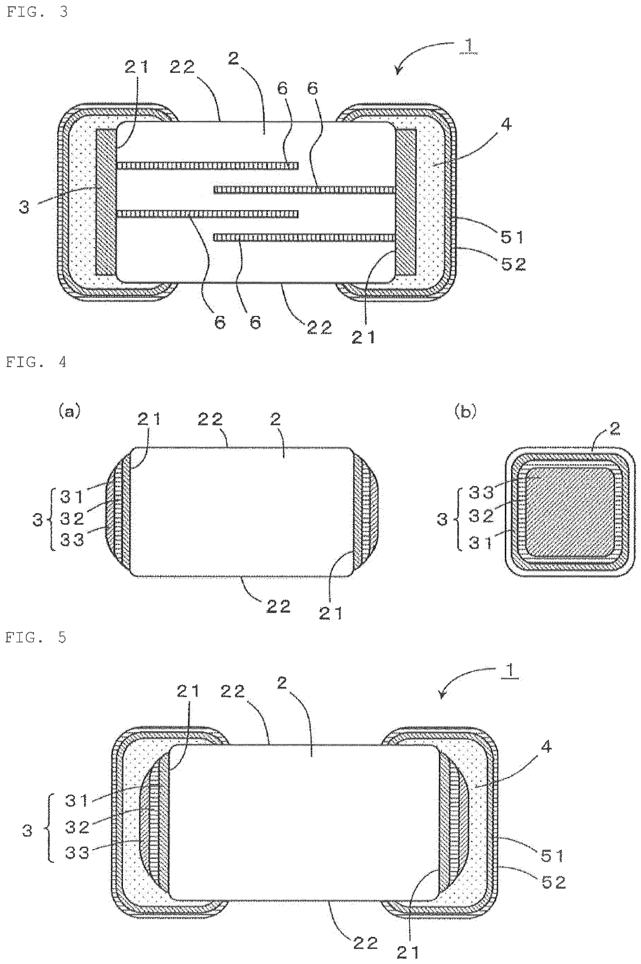

FIG. 3 is a schematic cross-sectional view of a chip-type ceramic semiconductor electronic component 1 according to a second embodiment of the present invention. As shown in FIG. 3, the chip-type ceramic semiconductor electronic component 1 further include two or more internal electrodes 6 disposed within a ceramic body 2. In the present embodiment, first external electrodes 3 are electrically connected to the internal electrodes 6. In the present embodiment, second external electrodes 4, first plated layers 51, and second plated layers 52 are configured in the same manner as those in the first embodiment. It is to be noted that the chip-type ceramic semiconductor electronic component 1 according to the present embodiment does not has to include the first plated layers 51 and the second plated layers 52. The configurations of the ceramic body 2, first external electrodes 3, and internal electrodes 6 can be set appropriately depending on desired characteristics. The ceramic body 2 may include, for example, $(Ba_{0.998}Sm_{0.002})$ $TiO_3$ that is a semiconductor ceramic material. In the formula mentioned above, Sm as a semiconducting agent may be substituted with another rare-earth element such as La and Nd. The internal electrodes 6 may be, for example, Ni electrodes. The internal electrode 6 is preferably 0.5 to 2.0 $\mu$m in thickness. The oxidation, diffusion, and segregation of the metal elements included in the first external electrodes 3 can be prevented, because the second external electrodes 4 can be also formed at a relatively low temperature in accordance with the present embodiment. As a result, the chip-type ceramic semiconductor electronic component can be achieved where the variation in the rate of change in resistance value is small between before and after mounting.

While the PTC thermistors have been described above as examples, the present invention is not to be considered limited to the PTC thermistors, but can be appropriately applied to other chip-type ceramic semiconductor electronic components such as NTC thermistors

[Method for Manufacturing Chip-type Ceramic Semiconductor Electronic Component]

A method for manufacturing a chip-type ceramic semiconductor electronic component according to the present invention will be described below, with the above-described chip-type ceramic semiconductor electronic component according to the first embodiment as an example, but the method for manufacturing is not to be considered limited thereto.

(Preparation of Mother Substrate)

First, as raw materials for the ceramic body, ceramic raw materials such as $BaCO_3$, $TiO_2$, PbO, $SrCO_3$, and $CaCO_3$ are weighed in predetermined amounts, and a semiconducting agent such as $Er_2O_3$ is weighed in a predetermined amount. As the semiconducting agent, an oxide or the like of at least one rare-earth element selected from the group consisting of Y, La, Ce, Pr, Nd, Sm, Eu, Gd, Tb, Dy, Ho, Er, Tm, Yb, and Lu may be used in place of $Er_2O_3$. In addition, as raw materials for the ceramic body, a property-improving agent such as $Mn_2O_3$ and a sintering aid such as $SiO_2$ may be used in addition to the ceramic raw materials and semiconducting agent mentioned above. The respective raw materials weighed are put in a ball mill along with a grinding medium such as partially stabilized zirconia (PSZ) (hereinafter, also referred to as PSZ balls) and pure water, and subjected to wet mixing and grinding. The obtained mixture was subjected to calcination at a predetermined temperature (for example, 1000 to 1200°C), thereby providing a calcined powder. The calcined powder obtained is, with the addition of an organic binder, a dispersant, and water thereto, granulated by mixing along with PSZ balls for a predetermined period of time. The granulation product obtained is shaped, thereby preparing an unfired mother substrate. This unfired mother substrate is subjected to a binder removal treatment, and to firing at a predetermined temperature (1200 to 1400°C) in the atmosphere, thereby providing a mother substrate.

(Formation of First External Electrode)

The first external electrodes are formed on both sides of the mother substrate. The first external electrodes are formed by a thin film formation method which is sputtering. While an embodiment where the first external electrodes each include three layers will be described as an example of a method for forming the first external electrodes, the present invention is not to be considered limited to this embodiment.

First, as the first layers of the first external electrodes that have an ohmic property with respect to the ceramic body, Cr layers are formed by sputtering. On the formed first layers of the first external electrodes, NiCu layers are, as the second layers of the first external electrodes, formed by sputtering. On the formed second layers of the first external electrodes, Ag layers are, as the third layers of the first external electrodes, formed by sputtering. In this way, the first external electrodes each including the three layers can be formed.

(Preparation of Ceramic Body with First External Electrode Formed)

The mother substrate with the first external electrodes formed in this way is cut into a predetermined dimension so as to provide the shape of the ceramic body with the first external electrodes formed. The substrate can be cut such that the ceramic body with the first external electrodes formed is, for example, 0.95 mm in lengthwise dimension (L dimension), 0.48 mm in widthwise dimension (W dimension), and 0.48 mm in thickness-wise dimension (T dimension).

It is to be noted that the lengthwise dimension (L dimension) of the above-mentioned ceramic body with the first external electrodes formed includes the thickness of the pair of first external electrodes.

The ceramic body with the first external electrodes formed is polished with the use of balls and a polishing powder, or the like, thereby making each side of the ceramic body curved. The polishing can remove burr which can be generated during the cutting, and improve the coating properties of a conductive paste at corners of the chip. FIG. 4(a) shows an example of a cross-sectional view of the ceramic body 2 with the first external electrodes 3 formed, after the polishing, whereas FIG. 4(b) shows an example of a side view thereof as viewed from the end surface 21 of the ceramic body 2. As shown in FIGS. 4(a) and 4(b), in addition to the ceramic body 2, the respective sides of the first external electrodes 3 may be also curved by polishing, but the present invention is not to be considered limited to this embodiment, and the respective sides of the first external electrodes 3 may be linear.

(Formation of Second External Electrode)

First, a conductive paste is prepared for forming the second external electrodes. The conductive paste is prepared by mixing 70 to 90 weight% of a conductive agent such as Ag, AgPd, or Cu, 10 to 30 weight% of a thermosetting resin such as an epoxy resin or a phenolic resin, and 1 to 5% of a diluent. Ends of the ceramic body with the first external electrodes formed are immersed in the conductive paste bath, pulled up, and then subjected to a heat treatment at 500°C or lower, preferably approximately 100 to 250°C. The second external electrodes are formed in this way.

(Formation of Plated Layers)

The first plated layers are formed to cover the surfaces of the second external electrodes. The first plated layers can be formed by, for example, electrolytically plating at least one of Ni and Cu. The second plated layers are formed to cover the surfaces of the first plated layers. The second plated layers can be formed by, for example, electrolytically plating Sn.

FIG. 5 shows an example of the chip-type ceramic semiconductor electronic component 1 obtained by the above-described manufacturing method. The chip-type ceramic semiconductor electronic component 1 manufactured in this way has the advantage of small variation in rate of change in resistance value.

While the method for manufacturing the chip-type ceramic semiconductor electronic component according to the present invention has been described above, with a PTC thermistor including no internal electrode as an example, other chip-type ceramic semiconductor electronic components such as PTC thermistors and NTC thermistors including internal electrodes can be also appropriately manufactured in accordance with the description in this specification.

For example, a PTC thermistor including internal electrodes can be manufactured in accordance with the procedure described below. Respective raw materials for the ceramic body are subjected to wet mixing and grinding, and the obtained mixture is subjected to calcination at a predetermined temperature, thereby providing a calcined powder. The calcined powder obtained is, with the addition of an organic binder thereto, subjected to a mixing treatment in a wet way, thereby providing a slurry form, and the slurry is then subjected to a shaping process with the use of a doctor blade method, thereby preparing ceramic green sheets. Then, a conductive paste for internal electrodes is applied to surfaces of the ceramic green sheets, thereby forming internal electrode patterns. The conductive paste for internal electrodes can be prepared by, for example, dispersing a Ni metal powder and an organic binder in an organic solvent. The paste for internal electrodes may be applied by, for example, screen printing. The predetermined number of ceramic green sheets with the internal electrode patterns thus formed are stacked, then sandwiched by the ceramic green sheets without any internal electrode pattern formed, and subjected to pressure bonding, thereby preparing a laminated body. This laminated body is cut into a predetermined dimension, thereafter, subjected to a binder removal treatment, and then subjected to firing at a predetermined temperature, thereby providing a ceramic body including internal electrodes. The first and second external electrodes, and in some cases, the first and second plated layers are formed on the ceramic body, thereby providing a PTC thermistor including internal electrodes.

EXAMPLES

[Example 1]

A chip-type ceramic semiconductor electronic component according to Example 1 was prepared in accordance with the following procedure. The chip-type ceramic semiconductor electronic component according to Example 1 is a PTC thermistor.

(Preparation of Mother Substrate)

First, $BaCO_3$, $PbO$, $SrCO_3$, $CaCO_3$, and $TiO_2$ as ceramic raw materials, $Er_2O_3$ as a semiconducting agent, and $Mn_2O_3$ as a property-improving agent were weighed in predetermined amounts. The respective raw materials weighed were put in a ball mill along with PSZ balls and pure water, and subjected to wet mixing and grinding. The obtained mixture was subjected to calcination at 1150°C, thereby providing a calcined powder. The calcined powder obtained was, with the addition of an acrylic acid binder as an organic binder, a dispersant, and water thereto, granulated by mixing along with PSZ balls for a predetermined period of time. The granulation product obtained was shaped, thereby preparing an unfired mother substrate. This unfired mother substrate was subjected to a binder removal treatment, and to firing at a maximum temperature of 1360°C in the atmosphere, thereby providing a mother substrate.

(Formation of First External Electrode)

First, as the first layers of the first external electrodes that have an ohmic property with respect to the ceramic body, Cr layers of 0.3 $\mu$m in thickness were formed by sputtering on both sides of the obtained mother substrate. On the formed first layers of the first external electrodes, NiCu layers of 1.0 $\mu$m in thickness were, as the second layers of the first external electrodes, formed by sputtering. On the formed second layers of the first external electrodes, Ag layers of 1.3 $\mu$m in thickness were, as the third layers of the first external electrodes, formed by sputtering.

(Preparation of Ceramic Body with First External Electrode Formed)

The mother substrate with the first external electrodes formed in this way was cut such that the lengthwise dimension (L dimension) was 0.95 mm , the widthwise dimension (W dimension) was 0.48 mm, and the thickness-wise dimension (T dimension) was 0.48 mm, thereby preparing a ceramic body with the first external electrodes formed. The thus obtained ceramic body with first external electrodes formed was polished with the use of balls and a polishing powder, or the like, thereby making each side of the ceramic body curved.

(Formation of Second External Electrode)

A conductive paste was prepared by mixing Ag as a conductive agent, an epoxy resin as a thermosetting resin, and a diluent for viscosity adjustment. Ends of the ceramic body with the first external electrodes formed were immersed in the conductive paste bath, pulled up, and then subjected to a heat treatment at 230°C for 30 minutes, thereby forming second external electrodes. The thickness of the second external electrode formed from the surface of the first external electrode was 15 $\mu$m.

(Formation of Plated Layers)

As the first plated layers, Ni layers of 6 $\mu$m in thickness were formed by electrolytic plating. Then, as the second plated layers, Sn layers of 4 $\mu$m in thickness were formed by electrolytic plating. The chip-type ceramic semiconductor electronic component according to Example 1 was obtained in accordance with the foregoing procedure.

[Comparative Example 1]

A chip-type ceramic semiconductor electronic component according to Comparative Example 1 was prepared in accordance with the following procedure. The chip-type ceramic semiconductor electronic component according to Comparative Example 1 is a PTC thermistor.
In accordance with the same procedure as in Example 1, the mother substrate was prepared, the first external electrodes were formed, and the ceramic body with the first external electrodes formed was prepared. A conductive paste for forming the second external electrodes was prepared by mixing a conductive agent, glass, a resin component, and an organic solvent. Ends of the ceramic body with the first external electrodes formed were immersed in the conductive paste bath, pulled up, and then baked at 600°C for 30 minutes, thereby forming the second external electrodes. The thickness of the second external electrode formed from the surface of the first external electrode was 35 $\mu$m. Then, in accordance with the same procedure as in Example 1, Ni layers were formed as the first plated layers, and Sn layers were then formed as the second plated layers. The chip-type ceramic semiconductor electronic component according to Comparative Example 1 was obtained in accordance with the foregoing procedure.

[Evaluation by Elemental Mapping]

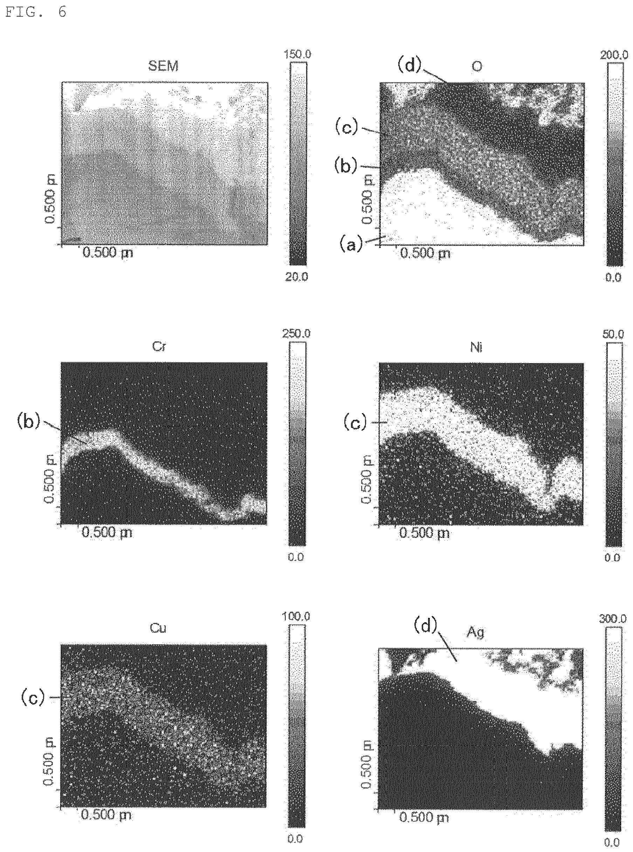

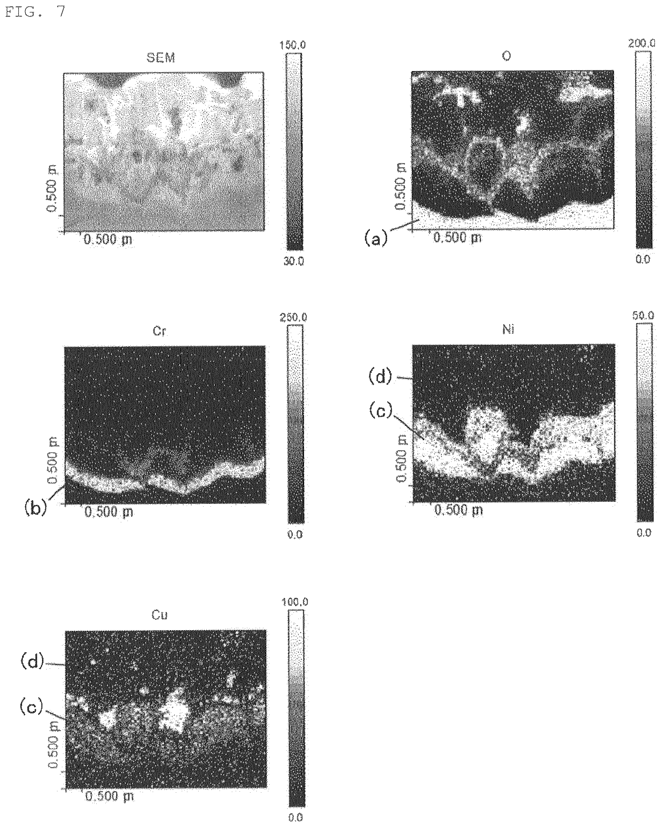

In order to check the distributions of elements present in the first external electrodes of the chip-type ceramic semiconductor electronic components according to Example 1 and Comparative Example 1, elemental mapping was carried out by Auger electron spectroscopy with the use of SAM. First, the samples were enclosed in resin, and polished along the thickness direction of the sample, thereby providing a cross section at a 1/2 point of the thickness-wise dimension (T dimension). The cross section was processed by irradiation with FIB (focused ion beam) at an angle of 5°, and subjected to measurement by Auger electron spectroscopy. FIG. 6 shows a SEM (scanning electron microscope) image of the first external electrode of the chip-type ceramic semiconductor electronic component according to Example 1, and the results of elemental mapping for O, Cr, Ni, Cu, and Ag in the electrode, whereas FIG. 7 shows a SEM (scanning electron microscope) image of the first external electrode of the chip-type ceramic semiconductor electronic component according to Comparative Example 1, and the results of elemental mapping for O, Cr, Ni, and Cu in the electrode. In FIGS. 6 and 7, the regions denoted by (a), (b), (c), and (d) respectively refer to the ceramic body, the first layer (Cr layer) of the first external electrode, the second layer (NiCu layer) of the first external electrode, and the third layer (Ag layer) of the first external electrode. From FIG. 6, it is determined that oxides of Ni and Cu were not segregated in the first external electrode of the chip-type ceramic semiconductor electronic component according to Example 1. From this result, it is determined that when the heat treatment temperature is 230°C for the formation of the second external electrodes, oxides of the metal elements are successfully prevented from being segregated in the first external electrode. In contrast, from FIG. 7, it is determined that in the first external electrode of the chip-type ceramic semiconductor electronic component according to Comparative Example 1, Ni was not oxidized or segregated, but an oxide of Cu was segregated. From the elemental mapping results for O and Cu elements in FIG. 7, it has been determined that there is segregation at the interface between the second layer (NiCu layer) and the third layer (Ag layer) of the first external electrode. From this result, it is determined that when the heat treatment (baking) temperature was 600°C for the formation of the second external electrodes, the metal elements are oxidized and segregated in the first external electrodes.

[Measurement of Resistance Value]

Currents were applied at 15 V to the above-mentioned chip-type ceramic semiconductor electronic components (PTC thermistors) according to Example 1 and Comparative Example 1, and the rates of changes in resistance value were measured between before and after the application. For each of Example 1 and Comparative Example 1, one hundred components of the chip-type ceramic semiconductor electronic components with the rate of change in resistance value equal to or more than a certain value were prepared, and mounted by soldering onto a substrate. The components were mounted under the conditions of top temperature: 260°C and holding time: 15 seconds. For each PTC thermistor, the resistance values at room temperature (25°C) were measured by a four-terminal method before and after the mounting. For each of the chip-type ceramic semiconductor electronic components according to Example 1 and Comparative Example 1, the rate of change in resistance value between before and after the mounting were obtained on the basis of the following formula.

$$\text{(Rate of Change in Resistance Value) [\%]} = \{\text{(Resistance Value after Mounting)} - \text{(Resistance Value before Mounting)}\}/\text{(Resistance Value before Mounting)} \times 100$$

Table 1 shows the average value, standard deviation, and maximum value for the rate of change in resistance value between before and after the mounting.

[Table 1]

|  |  | Example 1 | Comparative Example 1 |
|---|---|---|---|
| Rate of Change in Resistance Value (%) | Average Value | -0.9 | -2.0 |
|  | Standard Deviation | 0.4 | 3.4 |
|  | Maximum Value | 0.0 | 30.9 |

From Table 1, it is determined that the PTC thermistor according to Example 1 has a smaller maximum value for the rate of resistance change between before and after mounting, as compared with the PTC thermistor according to Comparative Example 1. Accordingly, the relatively low temperature of 230°C for the temperature of the heat treatment in the formation of the second external electrodes can be considered to have successfully suppressed the increase in resistance value in mounting and reduced the variation in rate of change in resistance value between before and after the mounting in a PTC thermistor mounted.

INDUSTRIAL APPLICABILITY

The chip-type ceramic semiconductor electronic component according to the present invention can be applied to electronic devices which require high reliability and high performance, because of the suppressed increase in resistance value in mounting and the reduced variation in rate of change in resistance value between before and after the mounting.

DESCRIPTION OF REFERENCE SYMBOLS

| | |
|---|---|
| 1: | chip-type ceramic semiconductor electronic component |
| 2: | ceramic body |
| 21: | end surface of the ceramic body |
| 22: | side surface of the ceramic body |
| 3: | first external electrode |
| 31: | first layer of the first external electrode |
| 32: | second layer of the first external electrode |
| 33: | third layer of the first external electrode |
| 4: | second external electrode |
| 51: | first plated layer |
| 52: | second plated layer |
| 6: | internal electrode |

**Claims**

1.  A chip-type ceramic semiconductor electronic component (1), which is a positive thermistor or a negative thermistor, comprising:

    a ceramic body (2) comprising a ceramic semiconductor;
    a pair of first external electrodes (3) formed on both end surfaces (21) of the ceramic body (2); and
    a pair of second external electrodes (4) formed to cover the first external electrodes (3) and extend partially on side surfaces (22) of the ceramic body (2),
    wherein the second external electrodes (4) comprise a conductive agent and a thermosetting resin hardenable at a temperature of 500°C or lower, and
    wherein each of the first external electrodes (3) is formed by sputtering,
    **characterized in that**
    each of the second external electrodes (4) is 1 to 35 $\mu$m in thickness.

2.  The chip-type ceramic semiconductor electronic component (1) according to claim 1, wherein the thermosetting resin is hardenable at a temperature of 250°C or lower.

3.  The chip-type ceramic semiconductor electronic component (1) according to one of claims 1 and 2, wherein the thermosetting resin comprises at least one of an epoxy resin and a phenolic resin.

4.  The chip-type ceramic semiconductor electronic component (1) according to any one of claims 1 to 3, wherein the conductive agent comprises metal particles comprising at least one of Ag, AgPd, and Cu.

5.  The chip-type ceramic semiconductor electronic component (1) according to any one of claims 1 to 4, further comprising first plated layers (51) formed to cover surfaces of the second external electrodes (4), wherein the first plated layers (51) comprise at least one of Ni and Cu, and the first plated layers (51) are each 3 to 10 $\mu$m in thickness.

6. The chip-type ceramic semiconductor electronic component (1) according to claim 5, wherein a ratio is 5 : 1 to 1 : 1 between the thickness of the second external electrode (4) from the surface of the first external electrode (3) and the thickness of the first plated layer (51) .

7. The chip-type ceramic semiconductor electronic component (1) according to any one of claims 1 to 6, wherein the first external electrodes (3) are ohmic-contacted to the ceramic body (2), thereby making a contribution to the resistance of the chip-type ceramic semiconductor electronic component.

8. The chip-type ceramic semiconductor electronic component (1) according to any one of claims 1 to 6, further comprising two or more internal electrodes (6) disposed within the ceramic body (2), wherein the first external electrodes (3) are electrically connected to internal electrodes (6).

**Patentansprüche**

1. Eine chipartige Keramik-Halbleiter-Elektronikkomponente (1), die ein positiver Thermistor oder ein negativer Thermistor ist, die folgende Merkmale aufweist:

einen Keramikkörper (2), der einen Keramikhalbleiter aufweist;
ein Paar von ersten äußeren Elektroden (3), die an beiden Endoberflächen (21) des Keramikkörpers (2) gebildet sind; und
ein Paar von zweiten äußeren Elektroden (4), die gebildet sind, um die ersten äußeren Elektroden (3) zu bedecken und sich teilweise auf Seitenoberflächen (22) des Keramikkörpers (2) zu erstrecken,
wobei die zweiten äußeren Elektroden (4) ein leitfähiges Mittel und ein wärmehärtbares Harz aufweisen, das bei einer Temperatur von 500 °C oder weniger aushärtbar ist, und
wobei jede der ersten äußeren Elektroden (3) durch Sputtern gebildet wird,
**dadurch gekennzeichnet, dass**
jede der zweiten äußeren Elektroden (4) 1 bis 35 $\mu$m dick ist.

2. Die chipartige Keramik-Halbleiter-Elektronikkomponente (1) gemäß Anspruch 1, bei der das wärmehärtbare Harz bei einer Temperatur von 250 °C oder weniger aushärtbar ist.

3. Die chipartige Keramik-Halbleiter-Elektronikkomponente (1) gemäß einem der Ansprüche 1 und 2, bei der das wärmehärtbare Harz ein Epoxidharz und/oder ein Phenolharz aufweist.

4. Die chipartige Keramik-Halbleiter-Elektronikkomponente (1) gemäß einem der Ansprüche 1 bis 3, bei der der leitfähige Agent Metallpartikel aufweist, die Ag, AgPd, und/oder Cu aufweisen.

5. Die chipartige Keramik-Halbleiter-Elektronikkomponente (1) gemäß einem der Ansprüche 1 bis 4, die ferner erste plattierte Schichten (51) aufweist, die gebildet sind, um Oberflächen der zweiten äußeren Elektroden (4) abzudecken, wobei die ersten plattierten Schichten (51) Ni und/oder Cu aufweisen, und die ersten plattierten Schichten (51) jeweils 3 bis 10 $\mu$m dick sind.

6. Die chipartige Keramik-Halbleiter-Elektronikkomponente (1) gemäß Anspruch 5, bei der ein Verhältnis zwischen der Dicke der zweiten äußeren Elektrode (4) von der Oberfläche der ersten Elektrode (3) und der Dicke der ersten plattierten Schicht (51) von 5:1 bis 1:1 beträgt.

7. Die chipartige Keramik-Halbleiter-Elektronikkomponente (1) gemäß einem der Ansprüche 1 bis 6, bei der die ersten äußeren Elektroden (3) ohmisch mit dem Keramikkörper (2) verbunden sind, was zu der Widerstandsfähigkeit der chipartigen Keramik-Halbleiter-Elektronikkomponente beiträgt.

8. Die chipartige Keramik-Halbleiter-Elektronikkomponente (1) gemäß einem der Ansprüche 1 bis 6, die ferner zwei oder mehr innere Elektroden (6) aufweist, die innerhalb des Keramikkörpers (2) angeordnet sind, wobei die ersten äußeren Elektroden (3) elektrisch mit inneren Elektroden (6) verbunden sind.

**EP 3 196 904 B1**

**Revendications**

1. Composant électronique à semi-conducteur en céramique de type puce (1), qui est une thermistance positive ou une thermistance négative, comprenant :

   un corps en céramique (2) comprenant un semi-conducteur en céramique ;
   une paire de premières électrodes externes (3) formées sur les deux surfaces d'extrémité (21) du corps en céramique (2) ; et
   une paire de secondes électrodes externes (4) formées pour couvrir les premières électrodes externes (3) et s'étendre partiellement sur les surfaces latérales (22) du corps en céramique (2),
   dans lequel les secondes électrodes externes (4) comprennent un agent conducteur et une résine thermodurcissable durcissable à une température inférieure ou égale à 500° C, et
   dans lequel chacune des premières électrodes externes (3) est formée par pulvérisation cathodique,
   **caractérisé en ce que**
   chacune des secondes électrodes externes (4) fait de 1 à 35 $\mu$m d'épaisseur.

2. Composant électronique à semi-conducteur en céramique de type puce (1) selon la revendication 1, dans lequel la résine thermodurcissable est durcissable à une température inférieure ou égale à 250° C.

3. Composant électronique à semi-conducteur en céramique de type puce (1) selon l'une des revendications 1 et 2, dans lequel la résine thermodurcissable comprend au moins l'une d'une résine époxy et d'une résine phénolique.

4. Composant électronique à semi-conducteur en céramique de type puce (1) selon l'une quelconque des revendications 1 à 3, dans lequel l'agent conducteur comprend des particules métalliques comprenant au moins l'un de Ag, AgPd et Cu.

5. Composant électronique à semi-conducteur en céramique de type puce (1) selon l'une quelconque des revendications 1 à 4, comprenant en outre des premières couches plaquées (51) formées pour couvrir des surfaces des secondes électrodes externes (4), dans lequel les premières couches plaquées (51) comprennent au moins l'un de Ni et Cu, et les premières couches plaquées (51) font chacune de 3 à 10 $\mu$m d'épaisseur.

6. Composant électronique à semi-conducteur en céramique de type puce (1) selon la revendication 5, dans lequel un rapport est de 5:1 à 1:1 entre l'épaisseur de la seconde électrode externe (4) à partir de la surface de la première électrode externe (3) et l'épaisseur de la première couche plaquée (51).

7. Composant électronique à semi-conducteur en céramique de type puce (1) selon l'une quelconque des revendications 1 à 6, dans lequel les premières électrodes externes (3) sont en contact ohmique avec le corps en céramique (2), apportant ainsi une contribution à la résistance du composant électronique à semi-conducteur en céramique de type puce.

8. Composant électronique à semi-conducteur en céramique de type puce (1) selon l'une quelconque des revendications 1 à 6, comprenant en outre deux électrodes internes (6) ou plus disposées à l'intérieur du corps en céramique (2), dans lequel les premières électrodes externes (3) sont connectées électriquement aux électrodes internes (6).

FIG. 1

FIG. 2

EP 3 196 904 B1

FIG. 3

FIG. 4

(a)

(b)

FIG. 5

16

FIG. 6

FIG. 7

**REFERENCES CITED IN THE DESCRIPTION**

**Patent documents cited in the description**

- WO 2009096333 A1
- JP H1092606 A
- EP 2393089 A1